# EUROPEAN PATENT APPLICATION

(11) **EP 4 852 485 A1**
(43) Date of publication of application: **09.12.2026**
(21) Application number: 26164586.5
(22) Date of filing: 13.03.2026
(51) Int. Cl.: H04W 12/08, H04W 12/33, H04W 12/50, H04W 12/63

(54) **INTELLIGENT RANGING BASED ON USER INTENT**

(30) Priority: 04.06.2025 US 202519227802
(71) Applicant: Google LLC, Mountain View, CA 94043 (US)
(72) Inventor: Adsule, Abhijit, Mountain View California, 94043 (US); Shevde, Sumukh A, Mountain View California, 94043 (US)
(74) Representative: Auger, Hannah Maria

(57) **Abstract**

A first computing device is configured to determine a user intent based on a user interaction with an application of the first computing device. The first computing device is further configured to responsive to determining that the unlock trigger has been satisfied, provide an indication of the unlock trigger to the second computing device to initiate a ranging session. The first computing device is further configured to determine whether the first computing device and the second computing device are within a predetermined distance of each other. The first computing device is further configured to responsive to determining that the first computing device and the second computing device are within the predetermined distance, send an indication of the user intent to the second computing device to cause the second computing device to unlock and to display a user interface of the application associated with the user intent.

## Description

### BACKGROUND

Computing devices may be communicatively connected to each other and use the connections as part of an authentication scheme. For instance, a computing device may enable another connected computing device to provide authorization to the computing device to unlock. The computing device may provide authorization to another computing device to unlock based on determining that is near the other computing device.

### SUMMARY

The claims define the subject matter for protection. Techniques of this disclosure enable a first computing device to cause a second computing device to unlock and display a user interface (UI) of an application associated with a user intent based on a user interaction with the application on the first computing device. When computing devices are connected to each other they may determine the distance between themselves and enable bypassing of lock screens should the computing devices be in sufficiently close proximity to each other (e.g., to enable a user to bypass a lock screen on their phone when wearing a connected smartwatch while preventing the bypassing of the lock screen when the user is not near their phone). However, this functionality may require computing devices to regularly determine the distance between themselves and thereby result in increased power consumption and reduced battery life of the computing devices, particularly those of smaller form factors (e.g., smartwatches, smart rings, etc.) and devices that are not configured with dedicated processors to offload such functionality from a main processor. Furthermore, even after a device is unlocked, a computing device may require a user to navigate to the application that they wish to interact with.

To avoid unnecessary power consumption and the need for a user to navigate to a desired application, a first computing device, such as a smartwatch, may determine a user intent based on a user interacting with an application of the first computing device. The smartwatch may determine that an unlock trigger that "gates" or otherwise dictates when to unlock a device has been satisfied based on this user intent. In response to determining that the unlock trigger has been satisfied, the smartwatch may initiate a ranging session with a second computing device, such as a smartphone, to determine whether the smartphone and smartwatch are within a predetermined distance of each other. If the smartphone and smartwatch are within the predetermined distance of each other, the smartwatch sends an indication of the user intent to the smartphone to cause the smartphone to unlock and display an interface of the application with which the user was interacting with on the smartwatch (e.g., as a companion application of the application of the second computing device). The smartwatch may use ranging sessions contingent upon a user intent satisfying an unlock trigger to enable the smartwatch and smartphone to reduce how often ranging sessions are performed and thereby reduce the power consumption associated with performing ranging sessions. In addition, the smartwatch and smartphone may use user intents associated with applications to enable the smartwatch and smartphone to provide a more seamless user experience. For example, the smartwatch and smartphone may use the user intents to enable the smartphone to directly display a UI of the application instead of requiring the user to navigate to the application after the second computing device unlocks.

In an example, a method includes determining, by a first computing device, a user intent based on a user interaction with an application of the first computing device; determining, by the first computing device and based on the user intent, whether an unlock trigger has been satisfied; responsive to determining that the unlock trigger has been satisfied, providing, by the first computing device, an indication of the unlock trigger to a second computing device to initiate a ranging session; determining, by the first computing device and as part of the ranging session, whether the first computing device and the second computing device are within a predetermined distance of each other; and responsive to determining that the first computing device and the second computing device are within the predetermined distance, sending, by the first computing device, an indication of the user intent to the second computing device to cause the second computing device to unlock and to display a user interface of the application associated with the user intent.

In another example, a first computing device includes memory; and processing circuitry in communication with the memory and configured to determine a user intent based on a user interaction with an application of the first computing device; determine, based on the user intent, whether an unlock trigger has been satisfied; responsive to determining that the unlock trigger has been satisfied, provide an indication of the unlock trigger to a second computing device to initiate a ranging session; determine, as part of the ranging session, whether the first computing device and the second computing device are within a predetermined distance of each other; and responsive to determining that the first computing device and the second computing device are within the predetermined distance, send an indication of the user intent to the second computing device to cause the second computing device to unlock and to display a user interface of the application associated with the user intent.

In yet another example, a non-transitory computer-readable storage medium is encoded with instructions that, when executed, cause at least one processor of a first computing device to determine a user intent based on a user interaction with an application of the first computing device; determine, based on the user intent, whether an unlock trigger has been satisfied; responsive to determining that the unlock trigger has been satisfied, provide an indication of the unlock trigger to a second computing device to initiate a ranging session; determine, as part of the ranging session, whether the first computing device and the second computing device are within a predetermined distance of each other; and responsive to determining that the first computing device and the second computing device are within the predetermined distance, send an indication of the user intent to the second computing device to cause the second computing device to unlock and to display a user interface of the application associated with the user intent.

The details of one or more examples of the disclosure are set forth in the accompanying drawings and the description below. Other features, objects, and advantages will be apparent from the description and drawings, and from the claims.

### BRIEF DESCRIPTION OF DRAWINGS

FIG. 1 illustrates an example computing system for causing a computing device to display a user interface of an application based on a user intent, in accordance with one or more aspects of this disclosure.
FIG. 2 illustrates an example computing device that determines user intent, in accordance with one or more aspects of this disclosure.
FIG. 3 illustrates an example computing device that displays user interfaces of applications based on user intents, in accordance with one or more aspects of this disclosure.
FIG. 4 is a flow chart that illustrates an example operation of computing devices for causing a computing device to display a user interface based on a user intent, in accordance with one or more aspects of this disclosure.
FIG. 5 is a flow chart that illustrates an example operation of a computing device for displaying a user interface of an application based on a user intent, in accordance with one or more aspects of this disclosure.
FIG. 6 is a flow chart that illustrates an example operation of a computing device in causing a second computing device to display a user interface of an application based on a user intent, in accordance with techniques of this disclosure.

Like reference characters denote like elements throughout the text and figures.

### DETAILED DESCRIPTION

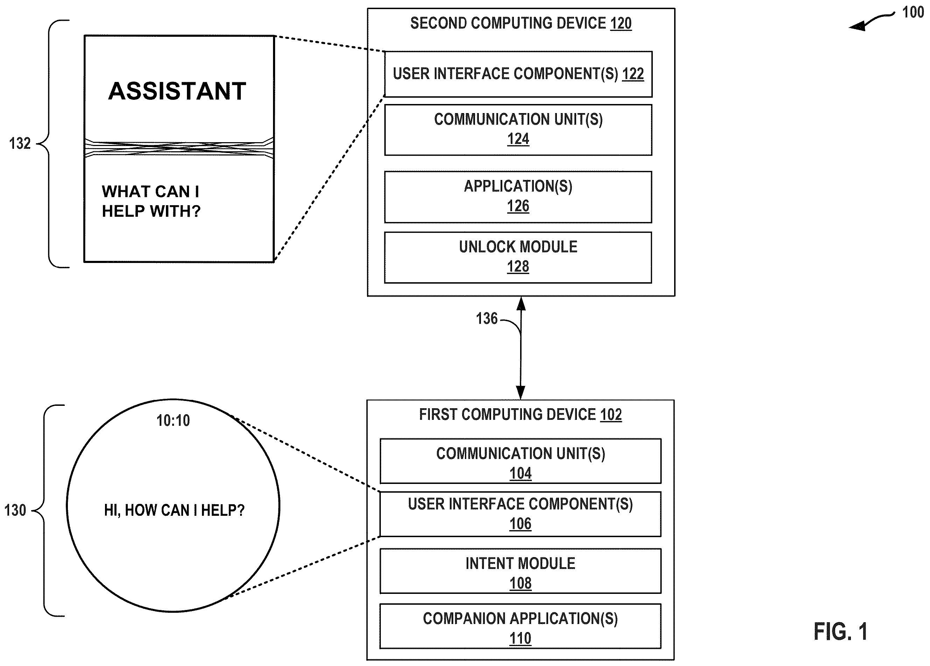

FIG. 1 illustrates an example computing system for causing a computing device to display a user interface of an application based on a user intent, in accordance with one or more aspects of this disclosure. In the example of FIG. 1, computing system 100 includes first computing device 102 and second computing device 120.

First computing device 102 may include one or more types of computing device, such as a smartphone, laptop, desktop, tablet, artificial intelligence (AI)-enabled smart pin, AI-enabled goggles/glasses, augmented reality (AR) glasses/goggles, virtual reality (VR) glasses/goggles, smart watch, smart ring, and/or other type of computing device. First computing device 102 may enable a user to interact with and control functionality of other computing devices, such as second computing device 102, via a user interface (UI) displayed by first computing device 102.

First computing device includes one or more of user interface components 106 (hereinafter "UIC 106"). UIC 106 may include one or more components of first computing device 102 that enable a user to interact with and receive output from first computing device 102. UIC 106 may include one or more input and output devices such as displays, touchscreens, speakers, microphones, haptic engines, LED indicators, projected keyboards, buttons, rotatable components (e.g., rotating bezels on a smartwatch), and/or other components. For example, UIC 106 may include a touchscreen display that enables a user to interact with visual elements included in a UI.

First computing device 102 includes one or more of communications units 104. Communication units 104 may include one or more components that enable communication with other computing devices, such as antennas, modems, radios, and network interfaces, among other components. First computing device 102 may use one or more of communication units 104 to communicate via one or more networks, such as non-terrestrial communication networks (e.g., satellite networks) and/or terrestrial networks via one or more protocols, such WIFI, Ethernet, Ultra-Wideband (UWB), BLUETOOTH, BLUETOOTH Low Energy (BLE), cellular protocols, and/or other types of communication protocols.

First computing device 102 includes one or more of companion applications 110, which may be software components of first computing device 102 that provide a variety of functionalities. First computing device 102 may execute companion applications 110 that include assistants, navigation applications, dialer applications, social media applications, fitness applications, and/or other sorts of applications. Companion applications 110 may be associated with and/or instances of applications executed by second computing device 120 (e.g., applications 126). In an example, first computing device 102 executes one of companion applications 110 as an extension of a navigation application executed by second computing device 120.

Second computing device 120 may include one or more types of computing device, such as a smartphone, laptop, desktop, tablet, artificial intelligence (AI)-enabled smart pin, AI-enabled goggles/glasses, augmented reality (AR) glasses/goggles, virtual reality (VR) glasses/goggles, smart watch, smart ring, and/or other type of computing device. Second computing device 120 may enable a user to unlock second computing device 120 using first computing device 102 for a user to access the functionality of second computing device 120.

Second computing device 120 includes one or more of user interfaces components 122 (hereinafter "UIC 122"). UIC 122 may include one or more components of second computing device 120 that enable a user to interact with and receive output from second computing device 120. UIC 122 may include one or more input and output devices such as displays, touchscreens, speakers, microphones, haptic engines, LED indicators, projected keyboards, buttons, rotatable components (e.g., rotating bezels on a smartwatch), and/or other components.

Second computing device 120 includes one or more of communication units 124. Communication units 124 may include one or more components that enable communication with other computing devices, such as antennas, modems, radios, and network interfaces, among other components. Second computing device 120 may use one or more of communication units 124 to communicate via one or more networks, such as non-terrestrial communication networks (e.g., satellite networks) and/or terrestrial networks. Second computing device 120 may be communicatively connected to first computing device 102 via communication units 124. For example, second computing device 120 and first computing device 102 may be communicatively connected via one or more connections, such as connection 136, in accordance with one or more protocols (e.g., BLUETOOTH, WI-FI, BLE, UWB, etc.). For example, connection 136 may be a BLUETOOTH Classic connection that enables communication between first computing device 102 and second computing device 120.

First computing device 102 may communicate via connection 136 to cause second computing device 120 to "unlock" or otherwise enable a user to bypass a lock screen of second computing device 120. Second computing device 120 may enable a user to unlock second computing device 120 in one or more ways, such as entering password or passcode, performing a biometric authentication (e.g., via a fingerprint scanner, facial recognition system, handprint scanner, and/or other types of biometric authentication), and/or other ways. Second computing device 120 may enable first computing device 102 to act as a source of authentication for second computing device 120. For example, second computing device 120 may enable a user of first computing device 102 to authorize the unlocking of second computing device 120.

As part of enabling first computing device 102 to authorize the unlocking of second computing device 120, first computing device 102 and second computing device 120 use ranging sessions to determine a distance between first computing device 102 and second computing device 120. First computing device 102 and second computing device 120 may perform a ranging session that includes using one or more communication protocols, such as BLE and UWB, to obtain time of flight (ToF) and/or Received Signal Strength Indicators (RSSIs) between first computing device 102 and second computing device 120. First computing device 102 and second computing device 120 may use the ranging session to determine the distance between first computing device 102 and second computing device 120. In an example, first computing device 102 and second computing device 120 transmit BLE signals to each other as part of connection 136. First computing device 102 and second computing device 120 use RSSIs of the exchanged BLE signals to compute a distance between each other.

First computing device 102 and second computing device 120 may determine whether first computing device 102 and second computing device 120 are within a predetermined distance from each other. First computing device 102 and second computing device 120 may determine whether first computing device 102 and second computing device 120 as part of the ranging session and using RSSIs and/or other techniques to determine distance. First computing device 102 and second computing device 120 may compare the determined distance to the predetermined distance to determine whether first computing device 102 and second computing device 120 are within the predetermined distance from each other. In an example, first computing device 102 and second computing device 120 determine a distance between each. First computing device 102 and second computing device 120 determine whether the determined distance is greater than the predetermined distance. In some examples, only one of first computing device 102 and second computing device 120 determines the distance and whether first computing device 102 and second computing device 120 are within the predetermined distance from each other. Responsive to determining that first computing device 102 and second computing device 120 are within the predetermined distance from each other, second computing device 120 may unlock.

First computing device 102 and second computing device 120 may periodically perform ranging sessions regardless of whether a user of computing system 100 intends to cause second computing device 120 to unlock. First computing device 102 and second computing device 120 may consume a non-trivial amount of power in periodically performing ranging sessions and as a result experience reduced battery life. In addition, a user may find it undesirable to remove the requirement for a ranging session as another individual may unlock second computing device 120 without the user present. Furthermore, second computing device 120 may require a user to navigate to an application on second computing device 120 that the user was interacting with on first computing device 102, thus disrupting a user flow and complicating the user experience. For example, first computing device 102 may perform continuous ranging from using Bluetooth Low Energy (BLE) Received Signal Strength Indicator (RSSI) measurements that results in first computing device 102 keeping Bluetooth transmission alive and regularly transmitting. The continuous ranging may result in a substantial impact to battery life as a primary processor of first computing device 102 may conduct the BLE ranging. While this battery life impact may be reduced if/when the ranging is offloaded to a lower-power always-on core, many devices and designs may not support usage of the power-power core for BLE ranging.

In accordance with the techniques of this disclosure, first computing device 102 causes second computing device 120 to unlock and display a UI of an application based on user interaction with the application of first computing device 102. First computing device 102 may determine a user intent based on a user interaction with an application executed by first computing device 102 and, based on the user intent, whether an unlock trigger has been satisfied. First computing device 102 provides an indication of the unlock trigger to second computing device 120 to initiate a ranging session. Responsive to determining that first computing device 102 and second computing device 120 are within a predetermined distance from each other, first computing device 102 sends an indication of the user intent to second computing device 120 to cause second computing device 120 to unlock and display a UI of the application associated with the user intent.

First computing device 102 may generate UI 130 as an instance of a UI of companion applications 110. First computing device 102 may generate UI 130 as including one or more visual elements generated by companion applications 110, such as text, video, animations, interactable elements (e.g., buttons), and/or other types of visual elements. In the example, of FIG. 1, an assistant application of companion applications 110 generates a UI as including the text "HI, HOW CAN I HELP YOU?". Companion applications 110 may cause UIC 106 to output UI 130 for display via one or more output components.

First computing device 102 includes intent module 108, which may be a software component configured to determine user intents based on user interaction with UI 130. First computing device 102 may receive user input consistent with a user interacting with a UI of companion applications 110, such as a user typing, providing spoken input, selecting a visual element, and/or other types of user input. First computing device 102 may provide an indication of the user input to intent module 108 for intent module 108 to determine a user intent that is a contextualized determination of what action the user intends to take with respect to second computing device 120 based on interaction with first computing device 102. In an example, first computing device 102 receives user input consistent with the user interacting with a button within UI 130 to request that a page be opened on second computing device 120. First computing device 102 provides an indication of the user input to intent module 108. Intent module 108 determines a user intent that is indicative of the user intending to switch from using companion applications 110 on first computing device 102 to using applications 126 on second computing device 120.

Intent module 108 may determine user intents as associated with one or more of companion applications 110 and/or applications 126. Intent module 108 may determine user intents based on one or more factors, such as which application is associated with UI 130, user selection of an application, user interaction with an application, and/or based on other factors. In an example, UIC 106 receives user input consistent with a user selecting a visual element labeled as "Open Assistant on Phone". Intent module 108 determines a user intent based on the interaction, with the user intent associated with an assistant companion application of companion applications 110 and an assistant application of applications 126.

Intent module 108 determines whether an unlock trigger has been satisfied based on the user intent. First computing device 102 may maintain one or more unlock triggers as logical thresholds (e.g., Y/N thresholds) for whether a user intent satisfies one or more conditions to initiate a ranging session. Intent module 108 may use the unlock triggers to manage or "gate" the initiation of ranging sessions with second computing device 120 and reduce how often the ranging sessions are performed. In an example, first computing device 102 determines a user intent representative of a user requesting that an assistant provided by first computing device 102 open a page on second computing device 120. First computing device 102 compares the user intent to unlock triggers maintained by first computing device 102 and determines that at least one unlock trigger is satisfied by the user intent.

First computing device 102 provides an indication of the unlock trigger to second computing device 120 in response to determining that the unlock trigger has been satisfied. Intent module 108 may cause communication units 104 to provide an indication of the unlock trigger to second computing device 120 via connection 136 to initiate a ranging session between first computing device 102 and second computing device 120. In an example, first computing device 102 determines that an unlock trigger has been satisfied. First computing device 102 provides the unlock trigger to second computing device 120 via connection 136 to initiate a ranging session.

Second computing device 120 includes unlock module 128, which may be a software component configured to manage the unlocking of second computing device 120. Unlock module 128 may process indications of unlock triggers received from first computing device 102 and cause second computing device 120 to initiate a ranging session with first computing device 102. For example, unlock module 128 may cause communication units 124 to initiate a ranging session and determine an RSSI of a BLE signal from first computing device 102 in response to receiving an indication of an unlock trigger.

First computing device 102 determines whether first computing device 102 and second computing device 120 are within a predetermined distance from each other as part of the ranging session. In some examples, second computing device 120 may determine whether first computing device 102 and second computing device 120 are within the predetermined distance from each other and provide an indication of the determination to first computing device 102. First computing device 102 may provide an indication that first computing device 102 and second computing device 120 are within the predetermined distance of each other to intent module 108.

First computing device 102 sends an indication of the user intent to second computing device 120 to cause second computing device 120 to unlock and display a UI of an application associated with the user intent. Intent module 108 may cause communications units 104 to send the indication of the user intent to second computing device 120 via connection 136. Second computing device 120 may provide the indication of user intent to unlock module 128 for unlock module 128 to process. Unlock module 128 may process the indication and determine an application of applications 126 that second computing device 120 will display a UI of when unlocked. In some examples, unlock module 128 may determine a particular page of an application and/or provide an indication to the application to determine a particular page to be displayed upon unlocking of second computing device 120.

Second computing device 120 may unlock and generate UI 132 based on the indication of the user intent and as including a UI of an application associated with the user intent. As part of generating UI 132, second computing device 120 may bypass an unlock UI page of second computing device 120 and proceed directly to the UI of the application associated with the user intent. In an example, second computing device 120 receives an indication of user intent and processes the indication of user intent using unlock module 128. Unlock module 128 determines an application associated with the user application and causes the application to generate a UI. Second computing device 120 outputs an instance of UI 132 as including the UI of the application.

The techniques of this application may provide one or more technical advantages that provide at least one practical benefit. For example, the initiation of ranging sessions based on user intents may enable computing devices to limit how often ranging sessions are performed and thereby avoid the power consumption associated with unnecessary ranging sessions (e.g., ranging sessions performed when a user does not intend to use second computing device 120). In another example, the use of user intent to cause second computing device 120 to display a UI of an application associated with the intent may improve the user experience of using computing system 100 by enabling second computing device 120 to unlock directly to a UI of application associated with the user intent instead of requiring a user to navigate to the application after second computing device 120 is unlocked.

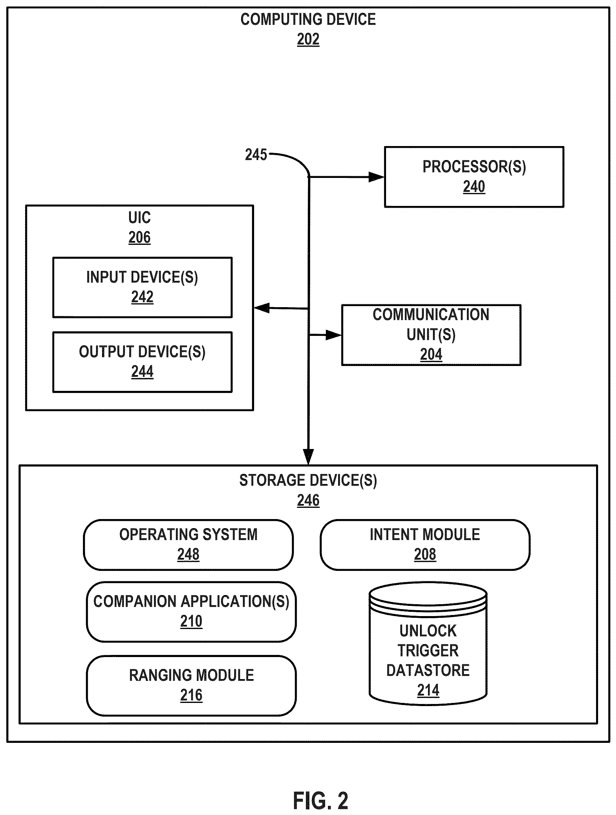

FIG. 2 illustrates an example computing device 202 that generates messages regarding incoming communications, in accordance with techniques of this disclosure. Computing device 202 may be similar to first computing device 102 as illustrated in FIG. 1 and provide similar functionality.

Computing device 202 includes one or more of user interface components 206 (hereinafter "UIC 206"). UIC 206 may be similar to UIC 106 as illustrated in FIG. 1 and provide similar functionality. UIC 206 may include one or more input devices, such as input devices 242, and one or more output components, such as output devices 244. Input devices 242 may include one or more devices capable of receiving input from a user of computing device 202, such as touchscreen, mice, keyboards, and microphones, among other devices capable of receiving user input. Output devices 244 may include one or more devices capable of generating output, such as displays, speakers, haptic engines, and LED indicators, among other components. For example, output devices 244 may include a display that displays GUIs generated by computing device 202.

Computing device 202 includes one or more of communications units 204. Communication units 204 may include one or more components that enable communication with other computing devices, such as antennas, modems, radios, and network interfaces, among other components. Computing device 202 may use one or more of communication units 204 to communicate via one or more networks, such as non-terrestrial communication networks and/or terrestrial cellular networks.

Computing device 202 includes one or more of processors 240. Processors 240 may include one or more types of processors and/or processing circuitry that includes mobile processors, desktop processors, integrated processors, reduced instruction set computer (RISC) processors, application processors, display controllers, sensor hubs, and/or any other hardware configured to function as a processing unit and/or processing circuitry. Processors 240 may execute the instructions of one or more software components stored by storage devices 246 and obtained via bus 245.

Computing device 202 includes bus 245, which may be a hardware and/or software bus of computing device 202. Bus 245 may include one or more hardware and/or software components that interconnect components of computing device 202, such as hardware interconnects, software interconnects, and/or other types of components. For example, bus 245 may connect processors 240 and storage devices 246.

Computing device 202 includes one or more of storage devices 246. Storage devices 246 may include one or more types of storage such as hard disk drives, solid state drives (e.g., SATA drives, NVMe drives, eMMC drives, etc.), magnetic tape drives, remote storage (e.g., cloud storage), and/or other types of storage. Storage devices 246 may store information such as instructions and/or other data of software components of computing device 202, such as an operating system of computing device 202. For example, storage devices 246 may include a non-transitory computer-readable storage medium encoded with instructions that, when executed, cause one or more of processors 240 to perform actions of one or more software components stored by storage devices 246. Storage devices 246 may include a computer program product that includes instructions that cause processors 240 to perform one or more actions of the instructions. For example, storage devices 246 may include an external flash drive that includes the instructions of one or more software components of storage devices 246.

Storage devices 246 may include operating system 248 (hereinafter "OS 248"). OS 248 may be an operating system of computing device 202 that provides an execution environment for one or more software components of computing device 202. For example, OS 248 may provide an execution environment for one or more applications of computing device 202.

Storage devices 246 include one or more of companion applications 210. Companion applications 210 may include one or more applications executed by processors 240 that provide a variety of functionality for a user of computing device 202. Companion application 210 may include one or more applications that are companions or extensions of applications executed by another computing device, such as second computing device 120 as illustrated in FIG. 1. For example, companion applications 210 may include a companion application to a dialer application of second computing device 120 that enables voice and video communication via computing device 202.

Companion applications 210 may generate UIs to enable a user of computing device 202 to interact with companion applications 210. Companion applications 210 may generate the UIs as part of providing a variety of functionality for the user of computing device 202, such as enabling a user to place a call, navigate to a desired location, control media playback on computing device 202 and/or second computing device 120, and/or other types of functionality. In some examples, companion applications 210 may generate UIs that enable the user to interact with companion applications 210 as extensions of applications executed by second computing device 120.

UIC 206 may receive user input consistent with user interaction with a UI output for display via output devices 244. UIC 206 may receive one or more types of user input, such as swiping, tapping, spoken input, gesture inputs, and/or other types of user input consistent with user interaction with a UI of companion applications 210 and/or other component of computing device 202 (e.g., OS 248). For example, UIC 206 may receive user input consistent with a user selecting a UI element of a media application, where the UI elements correspond to requesting that the media application open on second computing device 120.

Storage devices 246 include intent module 208, which may be a software component of computing device 202 configured to determine user intent. Intent module 208 may determine user intents based on user interactions with a UI displayed via output devices 244 and/or based on other user input (e.g., voice commands). Intent module 208 may determine a user intent with respect to the UI of an application that is currently displayed by computing device 202, such as a user intent associated with a user intending to open the application on second computing device 120. In an example, input devices 242 user input consistent with a user interaction with a UI element of a UI displayed by output devices 244. Computing device 202 provides an indication of the user interaction to intent module 208 for analysis by intent module 208. Intent module 208 determines a user intent based on the user interaction.

Intent module 208 may determine the user intent as corresponding to one or more types of user interaction. Intent module 208 may determine a user intent based on activation of an assistant (e.g., user interaction with a smart assistant on computing device 202), user input consistent with interacting with a notification displayed via a UI of computing device 202, user input consistent with interaction with an unlock user interface element displayed via the UI of computing device 202, failure of a biometric unlock attempt on a second computing device (e.g., computing device 202 determines a user has attempted to unlock second computing device 120 via a biometric sensor of second computing device 120), interaction with a menu visual element of the UI of computing device 202 (e.g., a UI element of a UI generated by OS 248), and/or receipt of an indication from second computing device 120 that a user has interacted with second computing device 120 (e.g., a user of second computing device 120 has picked up second computing device 120 from a desk or other surface). Intent module 208 may analyze user interactions with computing device 202 and/or indications of user interactions with second computing device 120 to determine whether the user interaction corresponds to at least one user intent for unlocking second computing device 120.

In some examples, computing device 202 may send an indication of user intent during an initial configuration or communication setup process with second computing device 120. Computing device 202 may determine that an initial communication session between computing device 202 and second computing device 120 is being established and send a user intent based on the establishing of the initial communication session (e.g., during a setup or pairing process between computing device 202 and second computing device 120). In an example, computing device 202 determines that an initial communication session between computing device 202 and second computing device 102 is being established. Computing device 202 sends an indication of user intent to second computing device 120 in response to the determination that the initial communication session is being established.

In some examples, intent module 208 may use an intent provided by OS 248 when determining whether a user intent satisfies an unlock trigger. For example, intent module 208 may gate a ranging session using a SCREEN_ON intent provided by OS 248. OS 248 may fire the SCREEN_ON intent when a user is engaged and interacting with computing device 202. Intent module 208 may cause ranging module 216 to perform a ranging session based on one or more user journeys that include firing of the SCREEN_ON intent. For example, intent module 208 may use determine a user intent and whether the intent satisfies an unlock trigger based on, when a user is engaged with computing device 202: when the screen is on (e.g., SCREEN_ON = 1) and user has started interacting with computing device 202, paired and locked second computing device 120 receives a notification and a user is likely to open the second computing device, and/or second computing device determines that a user has picked up locked second computing device 120.

Storage devices 246 include unlock trigger datastore 214, which may be a software component of computing device 202 configured to store information regarding unlock triggers. Unlock trigger datastore 214 may include one or more types of data storage, such as datastores, tables, data repositories, and/or other types of data structure. Computing device 202 may store unlock triggers as software objects used to gate the unlocking of connected computing devices (e.g., second computing device 120). For example, computing device 202 may store information regarding unlock triggers in a table that includes, for each unlock trigger, an identifier of the unlock trigger, conditions necessary to satisfy the unlock trigger, and/or other information.

Intent module 208 may determine whether a user intent satisfies an unlock trigger. Intent module 208 may determine whether the user intent satisfies the unlock trigger in one or more ways, such as by comparing the user intent to information regarding unlock triggers stored in unlock trigger datastore 214 to determine whether an unlock trigger is satisfied by the user intent. In some examples, intent module 208 may determine whether a software object stored in unlock trigger datastore 214 and corresponding to an unlock trigger has been triggered. Intent module 208 may provide an indication that a user intent satisfies an unlock trigger to second computing device 120 via communication units 204. In an example, intent module 208 determines that a user intent satisfies an unlock trigger included in unlock trigger datastore 214. Intent module 208 causes communication units 204 to provide an indication that the unlock trigger has been satisfied to second computing device 120 to initiate a ranging session.

Storage devices 246 include ranging module 216, which may be a software component of computing device 202 configured to perform ranging sessions with other computing devices. Ranging module 216 may use one or more components of computing device 202 to perform the ranging session, such as communication units 204. For example, ranging module 216 may perform a ranging session using communication units 204 to determine a distance between computing device 202 and second computing device 120. Ranging module 216 may process communications between computing device 202 and second computing device 120 to determine one or more metrics for the communications, such as time of flight, round trip time, and/or other metrics. In an example, intent module 208 provides an indication that an unlock trigger has been satisfied to ranging module 216. Ranging module 216 causes communication units 204 to transmit a signal to second computing device 120. Communication units 204 receive a transmitted signal in response from second computing device 120 and provide an indication of the received signal from second computing device 120 to ranging module 216. Ranging module 216 processes the received signal and determines a distance between computing device 202 and second computing device 120.

In some examples, ranging module 216 may perform a ranging session cooperatively with second computing device 120. Ranging module 216 may communicate with a companion ranging application or other such application executed by second computing device 120 while performing the ranging session. In an example, ranging module 216 causes communication units 204 to transmit a ranging signal to second computing device 120. Second computing device 120 determines a distance between computing device 202 and second computing device 120 and provides an indication of the distance to computing device 202.

Ranging module 216 may determine whether computing device 202 is within a predetermined distance of the other computing device of a ranging session. Ranging module 216 may determine whether computing device 202 and the other computing device of the ranging session (e.g., second computing device 120) are physically separated by a distance that is less than or equal to a predetermined distance. Ranging module 216 may use the predetermined distance as a threshold distance for controlling when to cause second computing device 120 to either unlock or remain unlocked. For example, ranging module 216 may determine that second computing device 120 is within a predetermined range of computing device 202 and that second computing device 120 should be unlocked. Ranging module 216 may provide an indication that computing device 202 and second computing device 120 are within the predetermined distance from each to second computing device 120 and/or intent module 208.

Intent module 208 may generate an indication of the user intent and send the user intent to second computing device 120. Intent module 208 may generate and send the user intent in response to ranging module 216 determining that computing device 202 and second computing device 120 are within the predetermined distance from each other. Intent module 208 may send the indication to cause second computing device 120 to unlock and display a UI of the application associated with the user intent.

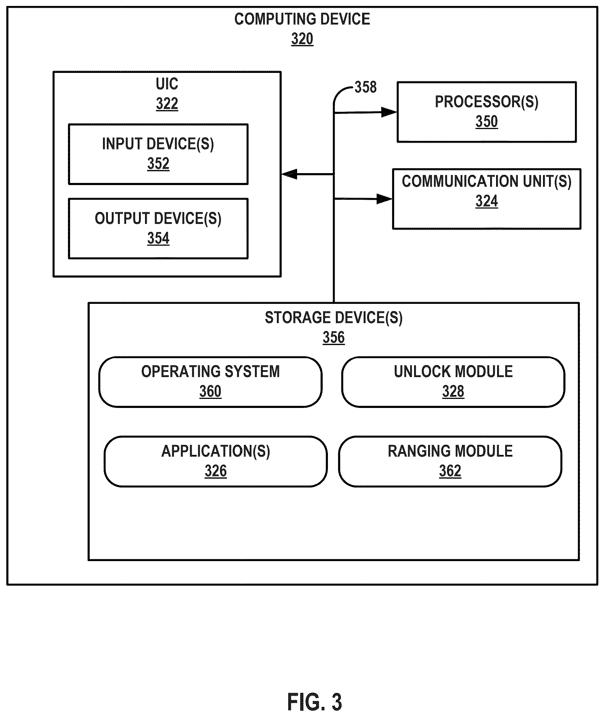

FIG. 3 illustrates an example computing device 320 that displays user interfaces of applications based on user intents, in accordance with one or more aspects of this disclosure. Computing device 320 may be similar to second computing device 120 as illustrated in FIG. 1 and provide similar functionality. For example, computing device 320 may communicate with a first computing device, such as first computing device 102 as illustrated in FIG. 1 and/or computing device 202 as illustrated in FIG. 2.

Computing device 320 includes one or more of user interface components 322 (hereinafter "UIC 322"). UIC 322 may be similar to UIC 122 as illustrated in FIG. 1 and provide similar functionality. UIC 322 may include one or more input devices, such as input devices 352, and one or more output devices, such as output devices 354. Input devices 352 may include one or more devices capable of receiving input from a user of computing device 320, such as touchscreen, mice, keyboards, and microphones, among other devices capable of receiving user input. Output devices 354 may include one or more devices capable of generating output, such as displays, speakers, haptic engines, and LED indicators, among other components. For example, output devices 354 may include a display that displays GUIs generated by computing device 320.

Computing device 320 may include one or more of communications units 324. Communication units 324 may include one or more components that enable communication with other computing devices, such as antennas, modems, radios, and network interfaces, among other components. Computing device 320 may use one or more of communication units 324 to communicate via one or more networks with other computing devices, such as first computing device 102. Computing device 320 may have similar or different communications units than first computing device 102.

Computing device 320 includes one or more of processors 350. Processors 350 may include one or more types of processors and/or processing circuitry that includes mobile processors, desktop processors, integrated processors, reduced instruction set computer (RISC) processors, application processors, display controllers, sensor hubs, and/or any other hardware configured to function as a processing unit and/or processing circuitry. For example, processors 350 may include mobile processors configured to minimize power consumption of computing device 320. Processors 350 may execute the instructions of one or more software components stored by storage devices 310. Processors 350 may be connected to one or more components of computing device 320 via bus 358.

Computing device 320 includes bus 358, which may be a hardware and/or software bus of computing device 320. Bus 358 may include one or more hardware and/or software components that interconnect components of computing device 320, such as hardware interconnects, software interconnects, and/or other types of components. For example, bus 358 may connect processors 350 and storage devices 356.

Computing device 320 includes one or more of storage devices 356. Storage devices 356 may include one or more types of storage such as hard disk drives, solid state drives (e.g., SATA drives, NVMe drives, eMMC storage, etc.), magnetic tape drives, remote storage (e.g., cloud storage), and/or other types of storage. Storage devices 310 may store information such as instructions and/or other data of software components of computing device 320, such as an operating system of computing device 320. For example, storage devices 356 may include a non-transitory computer-readable storage medium encoded with instructions that, when executed, cause one or more of processors 350 to perform actions of one or more software components stored by storage devices 356. Storage devices 356 may include a computer program product that includes instructions that cause processors 350 to perform one or more actions of the instructions. For example, storage devices 356 may include an external flash drive that includes the instructions of one or more software components of storage devices 356.

Storage devices 356 include operating system 360 (hereinafter "OS 360"), may be an operating system of computing device 320 that provides an execution environment for one or more software components of computing device 320. For example, OS 360 may be a mobile operating system or a desktop operating system that provides an execution environment for one or more applications of computing device 320.

Storage devices 356 include one or more of applications 326, which may be applications executed by computing device 320 and configured to provide various functionality. Applications 326 may include one or more types of applications, such as navigation applications, assistants, dialer applications, social media applications, fitness applications, and/or other types of application. Applications 326 may include one or more applications that offer companion applications for execution on another computing device, such as first computing device 102. For example, applications 326 may include an application that provides limited functionality on first computing device 102 via a companion application to the application, where first computing device 102 executes the companion application.

Storage devices 356 includes unlock module 328, which may be a software component of computing device 320 configured to manage the unlocking of computing device 320. Unlock module 328 may process indications of unlock triggers received from other computing devices, such as first computing device 102. In response to receiving an unlock trigger from first computing device 102, unlock module 328 may provide an indication of the unlock trigger to one or more components, such as ranging module 362.

Storage devices 356 include ranging module 362, which may be a software component of computing device 320 configured to perform ranging sessions. While described below with respect to first computing device 102, ranging module 362 may perform ranging sessions with other computing devices in lieu of or in addition to first computing device 102. Ranging module 362 may perform a ranging session with first computing device 102 in response to receiving an unlock trigger from unlock module 328 and/or receiving an indication regarding the start of a ranging session with first computing device 102. Ranging module 362 may perform the ranging session in one or more ways, such as by exchanging communications with first computing device 102, determining a time of flight and/or round trip time between computing device 320 and first computing device 102, and/or in other ways.

Ranging module 362 may determine whether computing device 320 and first computing device 102 are within the predetermined distance from each other. Ranging module 362 may use communications between computing device 320 and first computing device 102 to determine the distance between computing device 320 and first computing device 102. In response to determining the distance between computing device 302 and first computing device 102, ranging module 362 may determine whether the distance satisfies the predetermined distance.

Ranging module 362 may cause communication units 324 to provide an indication of whether computing device 320 and first computing device 102 are within a predetermined distance of each other. Ranging module 362 may generate an indication that the distance between computing device 320 and first computing device 102 satisfies the predetermined distance (e.g., that computing device 320 and first computing device 102 are within the predetermined distance from each other) and cause communication units 324 to provide the indication to first computing device 102.

Unlock module 328 may process indications of user intents received from first computing device 102. First computing device 102 may provide an indication of a user intent in response to determining that first computing device 102 and computing device 320 are within the predetermined distance from each other. Unlock module 328 may process the indications of user intents and determine a particular page of applications 326 that should be displayed when computing device 320 unlocks. In an example, unlock module 328 receives an indication of a user intent from communication units 324. Unlock module 328 processes the indication of user intent and determines that a navigation application of application 326 should open to a page displaying nearby restaurants.

Unlock module 328 may cause computing device 320 to unlock. Unlock module 328 may provide an indication to one or more components of computing device 320, such as OS 360, to cause the one or more components to unlock computing device 320. Unlock module 328 may cause computing device 320 to unlock subsequent to the receipt of the user intent and/or in response to user input consistent with interaction with computing device 320. For example, unlock module 328 may cause computing device 320 to unlock and display the particular page in response to computing device 320 receiving user input consistent with a user picking up computing device 320 or otherwise interacting with computing device 320.

Computing device 320 generates a UI that includes the particular page of applications 326 and/or OS 360 for display. Unlock module 328 may provide an indication to the application or to OS 360 to generate a UI that includes the particular page. In an example, unlock module 328 determines a particular page of applications 326 based on a received indication of user intent. Unlock module 328 provides an indication to the application of applications 326 associated with the particular page. In response to the indication, the application generates a UI that includes the particular page and provides data regarding the UI to UIC 322 for display.

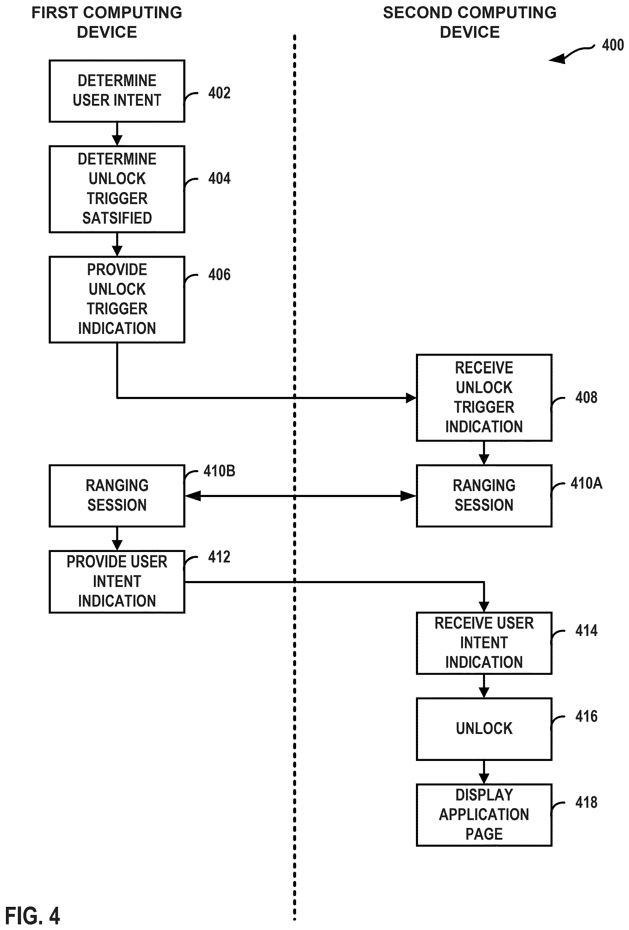

FIG. 4 is a flow chart that illustrates an example operation 400 of computing devices for causing a computing device to display a user interface based on a user intent, in accordance with one or more aspects of this disclosure. FIG. 4 is described in the context of FIG. 1.

A first computing device, such as first computing device 102, determines a user intent (402). First computing device 102 may determine the user intent in response to user interaction with computing device 102 and using intent module 108. In an example, first computing device 102 receives user input consistent with the user interacting with a companion application of companion applications 110. Intent module 108 determines a user intent based on the user interaction.

First computing device 102 determines whether an unlock trigger has been satisfied (404). First computing device 102 may determine whether the unlock trigger has been satisfied in one or more ways, such as by comparing the user intent to a repository of unlock triggers to determine whether the user intent satisfied an unlock trigger included in the repository of unlock triggers. In an example, first computing device 102 determines a user intent. First computing device 102 compares the determined user intent to unlock triggers maintained by first computing device 102 and determines that the determined user intent matches an unlock trigger. Responsive to determining that the determined user intent matches an unlock trigger, first computing device 102 determines that an unlock trigger has been satisfied. First computing device 102 may refrain from initiating the ranging session in response to determining that an unlock trigger has not been satisfied. For example, first computing device 102 may determine that an unlock trigger has not been satisfied and determine a different user intent while refraining from initiating the ranging session.

First computing device 102 provides an indication of the unlock trigger to a second computing device, such as second computing device 120 (406). First computing device 102 may provide an indication of the unlock trigger to second computing device 102 as part of initiating a ranging session with second computing device 120.

Second computing device 120 receives the indication of the unlock trigger from first computing device 102 (408). Second computing device 120 may receive the indication of the unlock trigger and process the indication of the unlock trigger. Second computing device 120 may perform one or more actions in response to receiving the indication of the unlock trigger, such as initiating a ranging session with first computing device 102.

Second computing device 120 performs a ranging session with first computing device 102 (410A). Second computing device 120 may perform the ranging session to determine a distance between first computing device 102 and second computing device 120. Second computing device 120 may determine whether the distance between first computing device 102 and second computing device 120 is within a predetermined distance. Second computing device 120 may provide an indication of whether first computing device 102 and second computing device 120 are within the predetermined distance from each other to first computing device 102.

First computing device 102 performs a ranging session with second computing device 120 (410B). First computing device 102 may perform the ranging session to determine whether first computing device 102 and second computing device 120 are within a predetermined distance from each other. As part of performing the ranging session, first computing device 102 may receive an indication of whether first computing device 102 and second computing device 120 are within the predetermined distance from each other. As part of the ranging session, first computing device 102 may initiate a Bluetooth Low Energy Received Signal Strength Indicator measurement with second computing device 120.

In some examples, first computing device 102 and second computing device 120 may cooperatively perform the ranging session. First computing device 102 and second computing device 120 may perform the ranging session by exchanging one or more communications between each other during the ranging session. In an example, first computing device 102 provides an indication of the unlock trigger to second computing device 120 to initiate the ranging session. First computing device 102 and second computing device 120 simultaneously perform the ranging session between each other by exchanging communications. First computing device 102 and second computing device 120 determine whether first computing device 102 and second computing device 120 are within the predetermined distance from each other.

First computing device 102 provides an indication of user intent to second computing device 120 (412). First computing device 102 may provide the indication of user intent in response to determining that first computing device 102 and second computing device 120 are within the predetermined distance from each other. In some examples, first computing device 102 may provide the indication of the user intent to second computing device 120 as an indication that first computing device 102 and second computing device 120 are within the predetermined distance from each other. First computing device 102 may refrain from sending an indication of the user intent to second computing device 120 in response to determining that first computing device 102 and second computing device 120 are not within the predetermined distance from each other. In an example, first computing device 102 performs the ranging session with second computing device 120. First computing device 102 determines that second computing device 120 is not within the predetermined distance from first computing device 102. First computing device 102, responsive to determining that first computing device 102 and second computing device 102 are not within the predetermined distance, refrains from sending the indication of user intent to second computing device 120.

Second computing device 120 receives the indication of user intent (414). Second computing device 120 may process the received indication of user intent to determine a page of an application and/or of an OS of second computing device 120 to output for display. In some examples, second computing device 120 may receive an indication of user intent that specifies the application and the page of the application that second computing device 120 is to output for display.

Second computing device 120 unlocks (416). Second computing device 120 may transition from a locked state into an unlocked state in response to receiving the indication of user intent. In some examples, second computing device 120 may wait to unlock until second computing device 120 determines that a user is interacting with second computing device 120. When unlocking, second computing device 120 bypasses a lock screen of a UI of second computing device 120 and directly proceeds to display a page of an application.

Second computing device 120 displays a page of an application (418). Second computing device 120 may generate a UI that includes the page of the application and output the UI via UIC 122. While described as a page of an application, second computing device 120 may generate a UI that includes a page of an OS (e.g., a settings page) and output the UI as including the page of the OS.

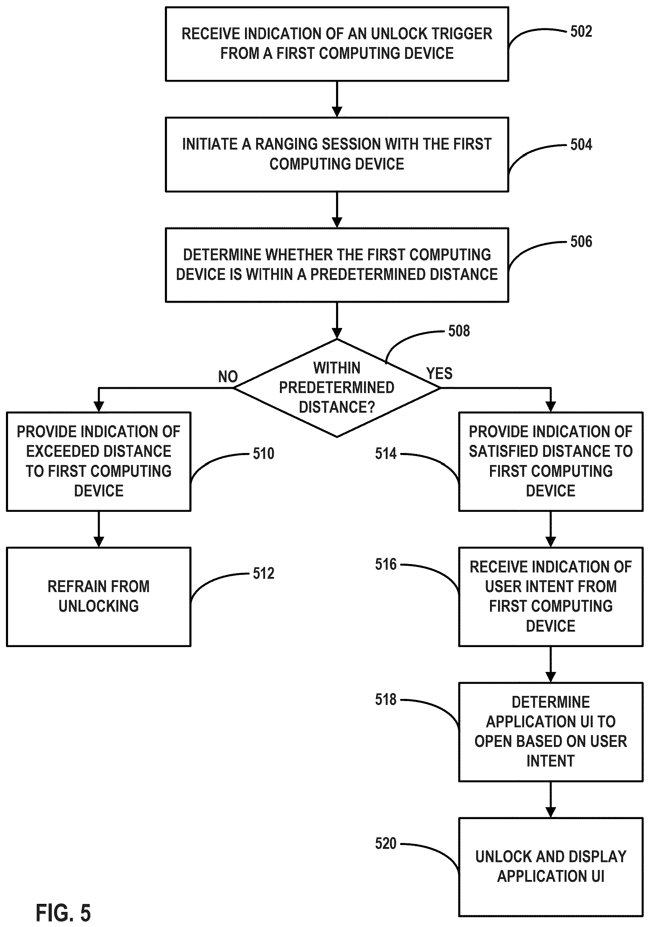

FIG. 5 is a flow chart that illustrates an example operation of a computing device for displaying a user interface of an application based on a user intent, in accordance with one or more aspects of this disclosure. FIG. 5 is described in the context of FIG 1.

A computing device, such as second computing device 120, receives an indication of an unlock trigger from a first computing device, such as first computing device 102 (502). Second computing device 120 may receive an indication of the unlock trigger and process the indication of the unlock trigger using one or more components, such as unlock module 128.

Second computing device 120 initiates a ranging session with first computing device 102 (504). Second computing device 120 initiates the ranging session in response to receiving the indication of the unlock trigger from first computing device 102 and to determine the distance between first computing device 102 and second computing device 120. In some examples, first computing device 102 and second computing device 120 cooperatively perform the ranging session to determine the distance between each other.

Second computing device 120 determines whether first computing device 102 is within the predetermined distance from second computing device 120 (506). Second computing device 120 determines the distance between first computing device 102 and second computing device 120 as part of the ranging session and compares the determined distance to the predetermined distance. For example, second computing device 120 may determine whether the determined distance from first computing device 102 is within the predetermined distance.

Responsive to determining that second computing device 120 is not within a predetermined distance from first computing device 102 (NO branch of 508), second computing device 120 provides an indication of exceeded distance to first computing device 102 (510). Second computing device 120 may cause communication units 124 to provide an indication to first computing device 102 that the distance between first computing device 102 and second computing device 120 exceeds the predetermined distance.

Second computing device 120 refrains from unlocking (512). Second computing device 120 may maintain a "locked" state in response to the determination that first computing device 102 and second computing device 120 are outside of the predetermined distance from each other. Second computing device 120 may require a user to move first computing device 102 and/or second computing device 120 closer to each other before unlocking.

Responsive to determining that first computing device 102 and second computing device 120 are within the predetermined distance from each other (YES branch of 508), second computing device 120 provides an indication of satisfied distance to first computing device 102 (514). Second computing device 120 generates an indication of the satisfied predetermined distance for transmission to first computing device 102. Second computing device 120 may cause communication units 124 to provide the indication that the distance between first computing device 102 and second computing device 120 satisfies the predetermined distance (e.g., that they are within the predetermined distance from each other) to first computing device 102. In an example, second computing device 120 determines that first computing device 102 and second computing device 120 are within the predetermined distance from each other. Second computing device 120 generates an indication of the satisfied predetermined distance and provides the indication to first computing device 102.

Second computing device 120 receives an indication of user intent from first computing device 102 (516). Second computing device 120 may trigger first computing device 102 to send the indication of user intent by providing the indication of the satisfied distance to first computing device 102. In an example, second computing device 120 provides an indication of satisfied distance to first computing device 102. Second computing device 120 receives the indication of user intent sent from first computing device 102 in response to the receipt of the indication of satisfied distance.

Second computing device 120 determines an application UI to open based on the user intent (518). Second computing device 120 processes the indication of user intent received from first computing device 102 to determine an application and a page of the application to open. In some examples, second computing device 120 may determine the application UI to open to based on an indication of the application and the page of the application included in the indication of user intent.

Second computing device 120 unlocks and displays an application UI (520). Second computing device 120 bypasses an unlock UI of second computing device 120 when unlocking and displaying the application UI. Second computing device 120 displays the application UI as including a page of the application determined based on the user intent. In an example, second computing device 120 receives an indication of user intent. Second computing device 120 determines that second computing device 120 should open to a particular page of an assistant application based on the received indication of user intent. Second computing device 120 causes the assistant application to generate a UI that includes the particular page and outputs the UI via UIC 122.

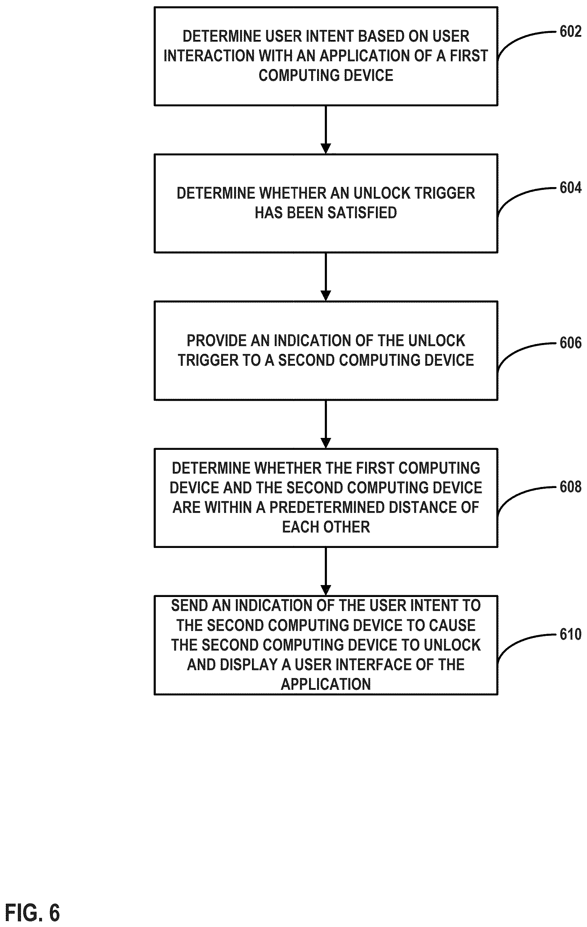

FIG. 6 is a flow chart that illustrates an example operation of a computing device in causing a second computing device to display a user interface of an application based on a user intent, in accordance with techniques of this disclosure. FIG. 6 is described in the context of FIG. 1.

A first computing device, such as first computing device 102, determines a user intent based on user interaction with an application of first computing device 102 (602). First computing device 102 may receive user interaction with a companion application, such as one of companion applications 110, and determine the user intent based on the interaction with the one of companion applications 110. First computing device 102 determines the user intent as a contextualized determination of an action that a user of first computing device 102 intends to take with respect to a second computing device, such as second computing device 120.

First computing device 102 determines whether an unlock trigger has been satisfied (604). First computing device 102 determines whether the unlock trigger has been satisfied in one or more ways, such as by comparing the user intent to one or more unlock triggers to determine whether there is a matching unlock trigger. For example, first computing device 102 may determine that a software object corresponding to the unlock trigger has been triggered as part of determining whether the unlock trigger has been satisfied.

First computing device 102 provides an indication of the unlock trigger to second computing device 120 (606). First computing device 102 provides the indication of the unlock trigger to second computing device 120 in response to determining that the unlock trigger has been satisfied to initiate a ranging session with second computing device 120.

First computing device 102 determines whether first computing device 102 and second computing device 120 are within a predetermined distance of each other (608). First computing device 102 may determine whether first computing device 102 and second computing device 120 are within the predetermined distance from each other as part of the ranging session. In some examples, first computing device 102 and second computing device 120 cooperatively determine whether first computing device 102 and second computing device 120 are within the predetermined distance from each other.

First computing device 102 sends an indication of the user intent to second computing device 120 to cause second computing device 120 to unlock and display a user interface of the application. First computing device 102 sends the indication of the user intent to second computing device 120 in response to determining that first computing device 102 and second computing device 120 are within the predetermined distance. First computing device 102 may send the indication of the user intent to cause second computing device 120 to bypass an unlock screen and directly open to the user interface associated with the user intent. In an example, first computing device 102 provides an indication of user intent to second computing device 120. Second computing device 120 processes the indication of user intent and determines a page of an application. Second computing device 120 causes the application to generate a UI that includes the page of the application and outputs the UI via UIC 122.

The following examples summarize certain aspects of the techniques of this disclosure:
Example 1: A method includes determining, by a first computing device, a user intent based on a user interaction with an application of the first computing device; determining, by the first computing device and based on the user intent, whether an unlock trigger has been satisfied; responsive to determining that the unlock trigger has been satisfied, providing, by the first computing device, an indication of the unlock trigger to a second computing device to initiate a ranging session; determining, by the first computing device and as part of the ranging session, whether the first computing device and the second computing device are within a predetermined distance of each other; and responsive to determining that the first computing device and the second computing device are within the predetermined distance, sending, by the first computing device, an indication of the user intent to the second computing device to cause the second computing device to unlock and to display a user interface of the application associated with the user intent.
Example 2: The method of example 1, wherein the user intent corresponds to at least one of: activation of an assistant, user input consistent with interacting with a notification displayed via a user interface of the first computing device, user input consistent with interaction with an unlock user interface element displayed via the user interface of the first computing device, failure of a biometric unlock attempt on the second computing device, interaction with a menu visual element of the user interface of the first computing device, or receipt of an indication that a user has interacted with the second computing device.
Example 3: The method of any of examples 1 and 2, wherein the indication causes the second computing device to bypass an unlock user interface.
Example 4: The method of any of examples 1 through 3, further includes responsive to determining that the unlock trigger has not been satisfied, refraining, by the first computing device, from initiating the ranging session.
Example 5: The method of any of examples 1 through 4, further includes responsive to determining that the first computing device and the second computing device are not within the predetermined distance, refraining, by the first computing device, from sending the indication of the user intent to the second computing device.
Example 6: The method of any of examples 1 through 5, further includes determining, by the first computing device, that an initial communication session between the first computing device and the second computing device is being established, and wherein sending the indication of the user intent to the second computing device is responsive to the determination that the initial communication session is being established.
Example 7: The method of any of examples 1 through 6, wherein determining that the unlock trigger has been satisfied further comprises: determining that a software object corresponding to the unlock trigger has been triggered.
Example 8: The method of any of examples 1 through 7, wherein determining whether the first computing device and the second computing device are within a predetermined distance of each other further comprises: initiating, by the first computing device, a Bluetooth Low Energy Received Signal Strength Indicator measurement with the second computing device.
Example 9: A first computing device includes memory; and processing circuitry in communication with the memory and configured to: determine a user intent based on a user interaction with an application of the first computing device; determine, based on the user intent, whether an unlock trigger has been satisfied; responsive to determining that the unlock trigger has been satisfied, provide an indication of the unlock trigger to a second computing device to initiate a ranging session; determine, as part of the ranging session, whether the first computing device and the second computing device are within a predetermined distance of each other; and responsive to determining that the first computing device and the second computing device are within the predetermined distance, send an indication of the user intent to the second computing device to cause the second computing device to unlock and to display a user interface of the application associated with the user intent.
Example 10: The first computing device of example 9, wherein the user intent corresponds to at least one of: activation of an assistant, user input consistent with interacting with a notification displayed via a user interface of the first computing device, user input consistent with interaction with an unlock user interface element displayed via the user interface of the first computing device, failure of a biometric unlock attempt on the second computing device, interaction with a menu visual element of the user interface of the first computing device, or receipt of an indication that a user has interacted with the second computing device.
Example 11: The first computing device of any of examples 9 and 10, wherein the indication causes the second computing device to bypass an unlock user interface.
Example 12: The first computing device of any of examples 9 through 11, wherein the processing circuitry is further configured to: responsive to determining that the unlock trigger has not been satisfied, refrain from initiating the ranging session.
Example 13: The first computing device of any of examples 9 through 12, wherein the processing circuitry is further configured to: responsive to determining that the first computing device and the second computing device are not within the predetermined distance, refrain from sending the indication of the user intent to the second computing device.
Example 14: The first computing device of any of examples 9 through 13, wherein the processing circuitry is further configured to: determine that an initial communication session between the first computing device and the second computing device is being established, and wherein to send the indication of the user intent to the second computing device, the processing circuitry is further configured to send the indication of the user intent to the second computing device responsive to the determination that the initial communication session is being established.
Example 15: A non-transitory computer-readable storage medium encoded with instructions that, when executed, cause at least one processor of a first computing device to: determine a user intent based on a user interaction with an application of the first computing device; determine, based on the user intent, whether an unlock trigger has been satisfied; responsive to determining that the unlock trigger has been satisfied, provide an indication of the unlock trigger to a second computing device to initiate a ranging session; determine, as part of the ranging session, whether the first computing device and the second computing device are within a predetermined distance of each other; and responsive to determining that the first computing device and the second computing device are within the predetermined distance, send an indication of the user intent to the second computing device to cause the second computing device to unlock and to display a user interface of the application associated with the user intent.
Example 16: The non-transitory computer-readable storage medium of example 15, wherein the user intent corresponds to at least one of: activation of an assistant, user input consistent with interacting with a notification displayed via a user interface of the first computing device, user input consistent with interaction with an unlock user interface element displayed via the user interface of the first computing device, failure of a biometric unlock attempt on the second computing device, interaction with a menu visual element of the user interface of the first computing device, or receipt of an indication that a user has interacted with the second computing device.
Example 17: The non-transitory computer-readable storage medium of any of examples 15 and 16, wherein the indication causes the second computing device to bypass an unlock user interface.
Example 18: The non-transitory computer-readable storage medium of any of examples 15 through 17, wherein the instructions further cause the at least one processor of the first computing device to: responsive to determining that the unlock trigger has not been satisfied, refrain from initiating the ranging session.
Example 19: The non-transitory computer-readable storage medium of any of examples 15 through 18, wherein the instructions further cause the at least one processor of the first computing device to: responsive to determining that the first computing device and the second computing device are not within the predetermined distance, refrain from sending the indication of the user intent to the second computing device.
Example 20: The non-transitory computer-readable storage medium of any of examples 15 through 19, wherein the instructions further cause the at least one processor of the first computing device to: determine that an initial communication session between the first computing device and the second computing device is being established, and wherein to send the indication of the user intent to the second computing device, the instructions further cause the at least one processor of the first computing device to send the indication of the user intent to the second computing device responsive to the determination that the initial communication session is being established.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

This description, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

In accordance with the examples of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structures or any other structure suitable for implementation of the techniques described. In addition, in some examples, the functionality described may be provided within dedicated hardware and/or software modules. Also, the techniques could be fully implemented in one or more circuits or logic elements.

## Claims

1. A method, comprising:
determining, by a first computing device, a user intent based on a user interaction with an application of the first computing device;
determining, by the first computing device and based on the user intent, whether an unlock trigger has been satisfied;
responsive to determining that the unlock trigger has been satisfied, providing, by the first computing device, an indication of the unlock trigger to a second computing device to initiate a ranging session;
determining, by the first computing device and as part of the ranging session, whether the first computing device and the second computing device are within a predetermined distance of each other; and
responsive to determining that the first computing device and the second computing device are within the predetermined distance, sending, by the first computing device, an indication of the user intent to the second computing device to cause the second computing device to unlock and to display a user interface of the application associated with the user intent.

2. The method of claim 1, wherein the user intent corresponds to at least one of:
activation of an assistant,
user input consistent with interacting with a notification displayed via a user interface of the first computing device,
user input consistent with interaction with an unlock user interface element displayed via the user interface of the first computing device,
failure of a biometric unlock attempt on the second computing device,
interaction with a menu visual element of the user interface of the first computing device, or
receipt of an indication that a user has interacted with the second computing device.

3. The method of any preceding claim, wherein the indication causes the second computing device to bypass an unlock user interface.

4. The method of any preceding claim, further comprising:
responsive to determining that the unlock trigger has not been satisfied, refraining, by the first computing device, from initiating the ranging session.

5. The method of any preceding claim, further comprising:
responsive to determining that the first computing device and the second computing device are not within the predetermined distance, refraining, by the first computing device, from sending the indication of the user intent to the second computing device.

6. The method of any preceding claim, further comprising:
determining, by the first computing device, that an initial communication session between the first computing device and the second computing device is being established, and wherein
sending the indication of the user intent to the second computing device is responsive to the determination that the initial communication session is being established.

7. The method of any preceding claim, wherein determining that the unlock trigger has been satisfied further comprises:
determining that a software object corresponding to the unlock trigger has been triggered.

8. The method of any preceding claim, wherein determining whether the first computing device and the second computing device are within a predetermined distance of each other further comprises:
initiating, by the first computing device, a Bluetooth Low Energy Received Signal Strength Indicator measurement with the second computing device.

9. A first computing device comprising:
memory; and
processing circuitry in communication with the memory and configured to:
determine a user intent based on a user interaction with an application of the first computing device;
determine, based on the user intent, whether an unlock trigger has been satisfied;
responsive to determining that the unlock trigger has been satisfied, provide an indication of the unlock trigger to a second computing device to initiate a ranging session;
determine, as part of the ranging session, whether the first computing device and the second computing device are within a predetermined distance of each other; and
responsive to determining that the first computing device and the second computing device are within the predetermined distance, send an indication of the user intent to the second computing device to cause the second computing device to unlock and to display a user interface of the application associated with the user intent.

10. The first computing device of claim 9, wherein the user intent corresponds to at least one of:
activation of an assistant,
user input consistent with interacting with a notification displayed via a user interface of the first computing device,
user input consistent with interaction with an unlock user interface element displayed via the user interface of the first computing device,
failure of a biometric unlock attempt on the second computing device,
interaction with a menu visual element of the user interface of the first computing device, or
receipt of an indication that a user has interacted with the second computing device.

11. The first computing device of claims 9 or 10, wherein the indication causes the second computing device to bypass an unlock user interface.

12. The first computing device of any of claims 9 to **11,** wherein the processing circuitry is further configured to:
responsive to determining that the unlock trigger has not been satisfied, refrain from initiating the ranging session.

13. The first computing device of any of claims 9 to 12, wherein the processing circuitry is further configured to:
responsive to determining that the first computing device and the second computing device are not within the predetermined distance, refrain from sending the indication of the user intent to the second computing device.

14. The first computing device of any of claims 9 to 13, wherein the processing circuitry is further configured to:
determine that an initial communication session between the first computing device and the second computing device is being established, and
wherein to send the indication of the user intent to the second computing device, the processing circuitry is further configured to send the indication of the user intent to the second computing device responsive to the determination that the initial communication session is being established.

15. A non-transitory computer-readable storage medium encoded with instructions that, when executed, cause at least one processor of a first computing device to perform the method steps of any of claims 1 to 8.
